(19)

**Europäisches Patentamt**
**European Patent Office**
**Office européen des brevets**

(11) **EP 4 567 997 A1**

(12) **EUROPEAN PATENT APPLICATION**
published in accordance with Art. 153(4) EPC

(43) Date of publication:
**11.06.2025 Bulletin 2025/24**

(21) Application number: **24842185.1**

(22) Date of filing: **28.06.2024**

(51) International Patent Classification (IPC):
***H01M 50/417*** *(2021.01)*    ***H01M 50/449*** *(2021.01)*

(52) Cooperative Patent Classification (CPC):
Y02E 60/10

(86) International application number:
**PCT/CN2024/102443**

(87) International publication number:
**WO 2025/016189 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023  PCT/CN2023/107568**

(71) Applicants:
  • **Senior (Foshan) New Material Technology Co.,
    Ltd.
    Foshan, Guangdong 528200 (CN)**
  • **Shenzhen Senior Technology Material Co., Ltd.
    Shenzhen, Guangdong 518106 (CN)**

(72) Inventors:
  • **CAI, Qi
    Shenzhen, Guangdong 518106 (CN)**

  • **LIN, Lujing
    Shenzhen, Guangdong 518106 (CN)**
  • **LIU, Mengquan
    Shenzhen, Guangdong 518106 (CN)**
  • **XIAO, Wuhua
    Shenzhen, Guangdong 518106 (CN)**
  • **XIONG, Di
    Shenzhen, Guangdong 518106 (CN)**
  • **CHEN, Yiping
    Shenzhen, Guangdong 518106 (CN)**
  • **LIN, Yulin
    Shenzhen, Guangdong 518106 (CN)**

(74) Representative: **PPR AG
    BGZ
    Rotenbodenstrasse 12
    9497 Triesenberg (LI)**

(54) **MICROPOROUS SEPARATOR FOR LITHIUM BATTERY AND PREPARATION METHOD THEREFOR**

(57)    The present invention relates to a microporous separator for lithium battery and its preparation method. Specifically, the present invention provides a microporous separator for lithium battery including a polyolefin resin, having excellent resilience performance and compression resistance performance in its thickness direction; the present invention also provides a preparation method for a highly resilient microporous separator for lithium battery.

EP 4 567 997 A1

## Description

### TECHNICAL FIELD

The present invention relates to the technical field of lithium-ion batteries, specifically to a microporous separator for lithium battery and a preparation method thereof.

### BACKGROUND

Polyolefin-based microporous membrane is widely used as a separation membrane for separation and selective permeation of various substances, and an isolation material, etc. For example, polyolefin-based microporous membrane is used as a precision filtration membrane, a separator for fuel cell, a separator for capacitor, a base material for functional membrane which is filled with functional materials in pores in order to show new functions, a separator for battery, etc. Among these applications, polyolefin-based microporous membrane is particularly suitable for use as a separator for lithium-ion batteries widely used in laptops, mobile phones, digital cameras, and the like. As its reasons, it can be enumerated that the polyolefin-based microporous membrane has excellent membrane mechanical strength and shutdown characteristics.

In addition, for a microporous separator for lithium battery, good resilience performance in a thickness direction is also required to ensure that the microporous separator undergoes smaller deformation in the thickness direction when the battery is subjected to impact in the thickness direction, and can be recovered more quickly when the impact force is removed, thereby ensuring the safety performance of the battery.

Although the prior art focuses on compression deformation rate, there is still a need for a separator with a high resilience rate in the thickness direction. Especially, a separator with a high resilience rate, a low compression deformation rate, and a large resilience amount in the thickness direction is still needed.

### SUMMARY

The present invention achieves a separator for lithium-ion battery with high resilience rate in a thickness direction by controlling a quantity proportion of high molecular weight chain segments in the polyolefin resin. In addition, the separator of the present invention also has a small compression deformation rate and a large resilience amount.

It is also found in the present invention that by controlling the parameters of the extrusion step in the separator manufacturing process, it is helpful to control the compression resistance of the separator.

A first aspect of the present invention provides a microporous separator for lithium battery, including a polyolefin resin. The microporous separator has a melt index of 0.04 g/10min - 3 g/10min, preferably 0.08 g/10min - 0.4 g/10min. In the microporous separator, a quantity proportion of polyolefin chain segment ingredients with a weight-average molecular weight of 2 million to 5 million is 5 mol% - 8 mol%, preferably 5 mol% - 7 mol%; and a resilience speed of the microporous separator in its thickness direction is greater than or equal to $2 \times 10^{-4}$ $\mu$m/s, preferably, greater than or equal to $3 \times 10^{-4}$ $\mu$m/s, greater than or equal to $5 \times 10^{-4}$ $\mu$m/s, greater than or equal to $7 \times 10^{-4}$ $\mu$m/s, greater than or equal to $8 \times 10^{-4}$ $\mu$m/s, and most preferably greater than or equal to $10 \times 10^{-4}$ $\mu$m/s; and

the resilience speed of the microporous separator in its thickness direction is calculated by the following formula:

$$V = (D2 - D1) / (T2 - T1)$$

in the formula, V - the resilience speed, measured in $\mu$m/s,
D2 - a thickness of microporous separator when its compressive loading force is reduced to 30 mN, measured in $\mu$m,
D1 - a thickness of microporous separator when its compression deformation reaches the lowest point, measured in $\mu$m,
T2 - time required for the compressive loading force of the microporous separator to be reduced to 30 mN, measured in s,
T1 - time required for the compression deformation of the microporous separator to reach the lowest point, measured in s,
test condition: the microporous separator is subjected to a loading force of 500 mN in its thickness direction, and kept the loading force for 300 s, followed by reducing a value of the loading force at a rate of 30 mN/min.

Preferably, the quantity proportion of polyolefin segment ingredients with a weight-average molecular weight greater than 5 million and below 9 million in the microporous separator is 0 mol% - 1 mol%, preferably 0.5 mol% - 1 mol%.

Preferably, the microporous separator satisfies one or more of the following:

a. when measured under the test condition, a compression deformation rate of the microporous separator in its thickness direction is less than or equal to 2.5%, preferably less than or equal to 1.8%, more preferably less than or equal to 1.5%, and most preferably less than or equal to 1%;
b. when measured under the test condition, a resilience recovery rate of the microporous separator in its thickness direction is greater than or equal to 0.5%, preferably greater than or equal to 1%, greater than or equal to 1.5%, greater than or equal to 2%, and most preferably greater than or equal to 3%;

where, the compression deformation rate = (original thickness - thickness when the compression deformation reaches the lowest point)/original thickness $\times$ 100%,

a resilience deformation rate = (original thickness - thickness when the compressive loading force is reduced to 30 mN)/original thickness $\times$ 100%,

a resilience recovery rate = | the compression deformation rate - the resilience deformation rate |.

Preferably, the polyolefin resin has a molecular weight distribution between 3 and 5, preferably between 3.5 and 4.5

Preferably, the quantity proportion of polyolefin chain segment ingredients with the weight-average molecular weight of 2 million to 5 million in the polyolefin resin is 5 mol% - 9 mol%, preferably 5 mol% - 8 mol%, and more preferably 6 mol% - 8 mol%.

Preferably, the quantity proportion of polyolefin chain segment ingredients with a weight-average molecular weight greater than 5 million and below 9 million in the polyolefin resin is 0 mol% - 2 mol%, preferably 1 mol% - 1.5 mol%.

Preferably, the microporous separator is a separator prepared by a wet process.

Preferably, the polyolefin resin is selected from polyethylene (including, for example, LDPE, LLDPE, HDPE, UHDPE), polypropylene, polybutene, polymethylpentene, a copolymer thereof, or a mixture thereof.

Preferably, the microporous separator has an average pore diameter of 25 nm -50 nm, preferably 30 nm - 45 nm; and the microporous separator has a thickness of 1 $\mu$m - 30 $\mu$m, preferably 4 $\mu$m - 12 $\mu$m.

A second aspect of the present invention provides a preparation method for a microporous separator for lithium battery, including the following steps:

(a) melting and blending a mixture containing a polyolefin resin and a plasticizer to form a melt;
(b) extruding and solidifying the melt obtained in step (a) to obtain a thick sheet;
(c) stretching the obtained thick sheet in a machine direction (MD direction) and in a transverse direction (TD direction) perpendicular to the machine direction to obtain a stretched sheet;
(d) removing the plasticizer from the stretched sheet to obtain a precursor of separator;
(e) heat-setting the precursor of separator to obtain the microporous separator for lithium battery;

where, the polyolefin resin has a melt index of 0.01 g/10min -3 g/10min, preferably 0.05 g/10min - 0.3 g/10min; and a quantity proportion of polyolefin chain segment ingredients with a weight-average molecular weight of 2 million to 5 million in the polyolefin resin is 5 mol% - 9 mol%, preferably 5 mol% - 8 mol%, and more preferably 6 mol% - 8 mol%.

Preferably, in step (a), the quantity proportion of polyolefin chain segment ingredients with a weight-average molecular weight greater than 5 million and below 9 million in the polyolefin resin is 0 mol% - 2 mol%, preferably 1 mol% - 1.5 mol%.

Preferably, the quantity proportion of polyolefin chain segment ingredients with a weight-average molecular weight greater than 5 million and below 9 million in the microporous separator is 0 mol% - 1 mol%, preferably 0.5 mol% -1 mol%.

Preferably, the polyolefin resin has a molecular weight distribution between 3 and 5, preferably 3.5-4.5.

Preferably, the quantity proportion of polyolefin chain segment ingredients with a weight-average molecular weight of 2 million to 5 million in the microporous separator is 5 mol% - 8 mol%, preferably 5 mol% - 7 mol%.

Preferably, a resilience speed of the microporous separator in its thickness direction is greater than or equal to 2 $\times$ 10$^{-4}$ $\mu$m/s, preferably greater than or equal to 3 $\times$ 10$^{-4}$ $\mu$m/s, greater than or equal to 5 $\times$ 10$^{-4}$ $\mu$m/s, greater than or equal to 7 $\times$ 10$^{-4}$ $\mu$m/s, greater than or equal to 8 $\times$ 10$^{-4}$ $\mu$m/s, and most preferably greater than or equal to 10 $\times$ 10$^{-4}$ $\mu$m/s; and

where, the resilience speed of the microporous separator in its thickness direction is calculated by the following formula:

$$V = (D2 - D1) / (T2 - T1)$$

in the formula, V - resilience speed, measured in μm/s,
D2 - a thickness of the microporous separator when its compressive loading force is reduced to 30 mN, measured in μm,
D1 - a thickness of the microporous separator when its compression deformation reaches the lowest point, measured in μm,
T2 - time required for the compressive loading force of the microporous separator to be reduced to 30 mN, measured in s,
T1 - time required for the compression deformation of the microporous separator to reach its lowest point, measured in s,
test condition: the microporous separator is subjected to a loading force of 500 mN in its thickness direction, and kept this loading force for 300 s, followed by reducing the value of the loading force at a rate of 30 mN/min.

Preferably, in step (a), a weight ratio of the polyolefin resin to the plasticizer is between 15:85 and 35:65, preferably between 18:82 and 23:77.

Preferably, in step (a), an extruder is used for melting and blending, and the extruder has parameters including: an extruder temperature of 150 °C - 260 °C and an extruder screw speed of 60 r/min - 125 r/min.

Preferably, in step (b), the mixture is extruded through a die lip of a die and attached to a casting roller for cooling and solidifying to form a thick sheet; and a die lip opening is *a*, a thickness of the thick sheet is *h,* and an expansion coefficient is defined as *A = h / a, A* being controlled to be greater than or equal to 1.2.

Preferably, the casting roller has a roll speed of 3 m/min - 8 m/min, and the die has a temperature of 160 °C - 240 °C.

Preferably, in step (c), the stretching in the MD direction is carried out at 80 °C - 120 °C with a stretching ratio of 4 to 7, and the stretching in the TD direction is carried out at 90 °C - 130 °C with a stretching ratio of 4 to 12.

Preferably, in step (e), the heat-setting comprises an oven heat treatment and a roller heat treatment, and preferably, the oven heat treatment has a temperature of 120 °C - 150 °C, and the roller heat treatment has a temperature of 50 °C - 70 °C.

Preferably, the polyolefin resin is selected from polyethylene (including, for example, LDPE, LLDPE, HDPE, UHDPE), polypropylene, polybutene, polymethylpentene, a copolymer thereof, or a mixture thereof.

## DESCRIPTION OF EMBODIMENTS

Before further describing the present invention, certain terms used in the description, embodiments, and appended claims are collected in the following paragraphs. The definitions listed herein should be read and understood by the person skilled in the art according to the remaining parts of the present invention. Unless otherwise defined, all technical and scientific terms used herein have the same meanings as those commonly understood by the person skilled in the art to which the present invention belongs.

The terms "one" and "another" as used herein, are only for descriptive purposes and should not be understood as indicating or implying relative importance or implicitly specifying the number of technical features indicated.

The term "about" as used herein, when referring to a value, means including its variations, such as ±10%, ±5%, ±1%, or ±0.1% of a specific value.

The term "substantially the same" as used herein, when referring to two values, means that the difference between the two values is less than 10%, 5%, or 1% of an average of the two values.

The term "polyolefin" as used herein may be a polyolefin monomer (i.e., a single type of polyolefin), a polyolefin copolymer, or a polyolefin mixture.

The term "mixture" as used herein refers to a physical mixture of two or more homopolymers with different molecular structures, two or more copolymers with different molecular structures, or both homopolymer and copolymer that have different molecular structures. Specifically, the mixture may include different polymers, i.e., at least two polymers with different chemical properties (such as polyethylene, polypropylene, and/or a copolymer of ethylene and propylene with different chemical properties); and/or polymers with the same chemical property but different characteristics (such as two different types of polyethylene with different characteristics (e.g., density, molecular weight, molecular weight distribution, rheology, additive (composition and/or percentage), etc.)).

The term "machine direction" as used herein, also known as MD direction, refers to a direction in which the machine is operated.

The term "transverse direction" as used herein, also known as TD direction, refers to a direction perpendicular to a direction in which the machine is operated.

A first aspect of the present invention provides a microporous separator for lithium battery including a polyolefin resin. The microporous separator has a melt index of 0.04 g/10min - 3 g/10min, preferably 0.08 g/10min - 0.4 g/10min; the quantity proportion of polyolefin chain segment ingredients with a weight-average molecular weight of 2 million to 5 million in the microporous separator is 5 mol% - 8 mol%, preferably 5 mol% - 7 mol%; a resilience speed of the microporous separator in its thickness direction is greater than or equal to $2\times10^{-4}$ $\mu$m/s, preferably greater than or equal to $3\times10^{-4}$ $\mu$m/s, greater than or equal to $5\times10^{-4}$ $\mu$m/s, greater than or equal to $7\times10^{-4}$ $\mu$m/s, greater than or equal to $8\times10^{-4}$ $\mu$m/s, and most preferably greater than or equal to $10\times10^{-4}$ $\mu$m/s, and

the resilience speed of the microporous separator in its thickness direction is calculated by the following formula:

$$V = (D2\text{-}D1) / (T2\text{-}T1)$$

in the formula, V - a resilience speed, measured in $\mu$m/s,

D2 - a thickness of the microporous separator when its compressive loading force is reduced to 30 mN, measured in $\mu$m,

D1 - a thickness of the microporous separator when its compression deformation reaches its lowest point, measured in $\mu$m,

T2 - time required for the compressive loading force of the microporous separator to be reduced to 30 mN, measured in s,

T1 - time required for the compression deformation of the microporous separator to reach its lowest point, measured in s,

test condition: the microporous separator is subjected to a loading force of 500 mN in its thickness direction, and kept this loading force for 300 s, followed by reducing the value of the loading force at a rate of 30 mN/min.

According to some preferred embodiments of the present invention, the quantity proportion of polyolefin chain segment ingredients with a weight-average molecular weight greater than 5 million and below 9 million in the microporous separator accounts for 0 mol% - 1 mol%, preferably 0.5 mol% - 1 mol%.

In the present invention, the polyolefin resin may be any polyolefin resin commonly used in the art for preparing a microporous separator for lithium battery, for example, it may be selected from polyethylene (including, for example, LDPE, LLDPE, HDPE, UHDPE), polypropylene, polybutene, polymethylpentene, a copolymer thereof, or a mixture thereof, with polyethylene and/or polypropylene being preferred.

According to the present invention, the polyolefin resin may be used as long as it is capable of producing the microporous separator for lithium battery required by the present invention. In order to provide a microporous separator with superior resilience performance in its thickness direction, it is preferred that the quantity proportion of polyolefin chain segment ingredients with a weight-average molecular weight greater than 5 million and below 9 million in the polyolefin resin is 0 mol% - 2 mol%, preferably 1 mol% - 1.5 mol%. Preferably, the quantity proportion of polyolefin chain segment ingredients with a weight-average molecular weight of 2 million to 5 million in the polyolefin resin is 5 mol% - 9 mol%, preferably 5 mol% - 8 mol%, and more preferably 6 mol% - 8 mol%. Preferably, a molecular weight distribution of the polyolefin resin is between 3 and 5, preferably between 3.5 and 4.5.

In some specific embodiments of the present invention, the microporous separator satisfies one or more combinations of the following:

a. when measured under the test condition, a compression deformation rate of the microporous separator in its thickness direction is less than or equal to 2.5%, preferably less than or equal to 1.8%, more preferably less than or equal to 1.5%, and most preferably less than or equal to 1%;

b. when measured under the test condition, a resilience recovery rate of the microporous separator in its thickness direction is greater than or equal to 0.5%, preferably greater than or equal to 1%, greater than or equal to 1.5%, greater than or equal to 2%, and most preferably greater than or equal to 3%;

where, compression deformation rate = (original thickness - thickness when the compression deformation reaches the lowest point) / original thickness $\times$ 100%,

resilience deformation rate = (original thickness - thickness when the compressive loading force is reduced to 30 mN) / original thickness $\times$ 100%,

resilience recovery rate = | compression deformation rate - resilience deformation rate |.

In order to obtain a microporous separator with superior resilience performance in the thickness direction, the microporous separator of the present invention is preferably a separator prepared by a wet process.

According to the present invention, the average pore diameter of the microporous separator may be 25 nm - 50 nm, preferably 30 nm - 45 nm, and the thickness of the microporous separator may be 1 $\mu$m - 30 $\mu$m, preferably 4 $\mu$m - 12 $\mu$m.

A second aspect of the present invention provides a preparation method for a microporous separator for lithium battery, including the following steps:

(a) melting and blending a mixture containing a polyolefin resin and a plasticizer to form a melt;
(b) extruding and solidifying the melt obtained in step (a) to obtain a thick sheet;
(c) stretching the obtained thick sheet in a machine direction (MD direction) and in a transverse direction (TD direction) perpendicular to the machine direction to obtain a stretched sheet;
(d) removing the plasticizer from the stretched sheet to obtain a precursor of separator;
(e) heat-setting the precursor of separator to obtain a microporous separator for lithium battery;

where, the polyolefin resin has a melt index of 0.01 g/10min - 3 g/10min, preferably 0.05 g/10min - 0.3 g/10min, and the quantity proportion of polyolefin chain segment ingredients with a weight-average molecular weight of 2 million to 5 million in the polyolefin resin is 4 mol% - 9 mol%, preferably 5 mol% - 8 mol%.

According to the present invention, by treating a mixture containing appropriate polyolefin resin and plasticizer according to the preparation method of the present invention, a microporous separator having excellent resilience performance in the thickness direction can be obtained, which is suitable for applications in lithium batteries.

In the present invention, the polyolefin resin may be any polyolefin resin commonly used in the art for preparing a microporous separator for lithium battery, for example, it may be selected from polyethylene (including LDPE, LLDPE, HDPE, UHDPE), polypropylene, polybutene, polymethylpentene, a copolymer thereof, or a mixture thereof, with polyethylene and/or polypropylene being preferred.

In the present invention, the plasticizer is a small-molecule solvent that can dissolve the polyolefin resin, for example, it may be liquid paraffin, diethyl phthalate, palm oil, etc., preferably, liquid paraffin having a kinematic viscosity of 35 mm$^2$/s - 120 mm$^2$/s at 40 °C, and further preferably liquid paraffin having a kinematic viscosity of 40 mm$^2$/s - 55 mm$^2$/s at 40 °C. The testing method for kinematic viscosity is based on GB/T 265.

According to the present invention, in step (a), a weight ratio of the polyolefin resin to the plasticizer is preferably between 15:85 and 35:65, and more preferably between 18:82 and 23:77. Specifically, the weight ratio of the polyolefin resin to the plasticizer may be 15:85, 16:84, 17:83, 18:82, 19:81, 20:80, 21:79, 22:78, or 23:77, etc. By using the weight ratio of polyolefin resin to plasticizer mentioned above, the resilience performance of the microporous separator in the thickness direction can be improved.

In order to further improve the resilience performance of the microporous separator in the thickness direction, in the polyolefin resin, the quantity proportion of polyolefin chain segment ingredients with a weight-average molecular weight greater than 5 million and below 9 million is 0 mol% - 2 mol%, preferably 1 mol% - 1.5 mol%. Furthermore, the molecular weight distribution of the polyolefin resin is in a range of 3-5, preferably 3.5-4.5.

According to the present invention, in step (a), the treatment may be carried out using any of the existing methods capable of forming the mixture into a melt, for example, an extruder may be used for melt blending. As some preferred embodiments, parameters of the extruder include: an extruder temperature of 150 °C - 260 °C, preferably 180 °C - 250 °C, and an extruder screw speed of 60 r/min - 125 r/min, preferably 70 r/min - 90 r/min.

According to the present invention, in step (b), the method of extruding and solidifying the melt into a thick sheet is capable of forming a thick sheet of a desired thickness.

The inventors of the present invention also found through in-depth research that controlling the parameters of the extrusion step in the separator manufacturing process helps to control the compression resistance of the separator. Under the condition of fixed extrusion quantity, the thick sheet in step (b) can be achieved by matching the die lip opening and casting speed. Assuming that the polymer has a melt die-swelling coefficient k, a melt flow rate out of the die v, a die lip opening *a*, a casting speed *b,* and a thickness of thick sheet *h,* then

$h = a \times k \times (v / b)$, and $kv = (h / a) \times b$, where an expansion coefficient is defined as $A = h / a$, and when the *A* is smaller, the compression resistance of the separator is worse. When the mixture is extruded through the die lip of a die and attached to a casting roller for cooling and solidifying to form the thick sheet, the die lip opening is *a*, the thickness of thick sheet is *h,* and the expansion coefficient is defined as $A = h / a$, preferably, the $A$ is controlled to be greater than or equal to 1.2.

In the present invention, the control of the expansion coefficient A may be achieved by the roll speed of casting roller, the melt flow rate out of the die, and the die lip opening together. The melt flow rate out of the die may be comprehensively adjusted by the extruder screw speed and the temperature of die.

Further, the roll speed of the casting roller may be 3 m/min - 8 m/min, preferably 5 m/min - 6 m/min; the temperature of die may be 160 °C - 240 °C, preferably 180 °C - 220 °C. Preferably, the temperature of the casting roller may be 20 °C - 60 °C.

Further, the die lip opening may be 0.5 mm - 4 mm, preferably 0.8 mm - 3 mm.

According to the present invention, in step (c), the thick sheet is stretched to obtain a stretched sheet, and the stretching includes a stretching in the MD direction and a stretching in the TD direction. Specifically, the stretching in the MD direction may be carried out before the stretching in the TD direction; or, the stretching in the TD direction may be carried out before the stretching in the MD direction, with the former being preferred.

According to some preferred embodiments of the present invention, in step (c), the stretching in the MD direction is carried out at 80 °C - 120 °C with a stretching ratio of 4 to 7, and the stretching in the TD direction is carried out at 90 °C - 130 °C with a stretching ratio of 4 to 12. Preferably, the stretching in the MD direction is carried out at 95 °C - 110 °C with a stretching ratio of 6 to 8, and the stretching in the TD direction is carried out at 105 °C - 125 °C with a stretching ratio of 6 to 10.

According to the present invention, in step (d), the plasticizer may be removed from the stretched sheet by any method, preferably, an extraction agent is used to remove the plasticizer from the stretched sheet. The extraction agent may be an alkane-based extraction agent, preferably a halogenated hydrocarbon-based extraction agent, with dichloromethane being the most preferred extraction agent.

As a method of removing the plasticizer from the stretched sheet by using an extraction agent, the plasticizer in the stretched sheet may be removed by means of circulation feed of the extraction agent. The circulation feed rate of the extraction agent is preferably 1 m$^3$/h - 5 m$^3$/h. After extraction, the stretched sheet may be heated for drying by means of one or more of a hot roller, a heating plate, or a hot air. Preferably, a drying temperature is 20 °C - 150 °C.

According to the present invention, there is no specific limitation on the method and condition of the heat-setting treatment in step (e). For example, the heat-setting may include an oven heat treatment and a roller heat treatment. Preferably, the temperature of the oven heat treatment is 120 °C - 150 °C and the temperature of the roller heat treatment is 50 °C - 70 °C. In addition, the time for oven heat treatment may be 2 s - 30 s, and the time for roller heat treatment may be 5 s -60 s.

By adopting the above preparation method for the preparation, in obtained microporous separator, the quantity proportion of polyolefin chain segment ingredients with a weight-average molecular weight of 2 million to 5 million accounts for 5 mol% - 8 mol%, preferably 5 mol% - 7 mol%. Preferably, in the microporous separator, the quantity proportion of polyolefin chain segment ingredients with a weight-average molecular weight greater than 5 million and below 9 million accounts for 0 mol% - 1 mol%, preferably 0.5 mol% - 1 mol%. Preferably, the resilience speed of the microporous separator in the thickness direction is greater than or equal to $2 \times 10^{-4}$ μm/s, preferably, greater than or equal to $3 \times 10^{-4}$ μm/s, greater than or equal to $5 \times 10^{-4}$ μm/s, greater than or equal to $7 \times 10^{-4}$ μm/s, greater than or equal to $8 \times 10^{-4}$ μm/s, and most preferably greater than or equal to $10 \times 10^{-4}$ μm/s.

The resilience speed of the microporous separator in the thickness direction is calculated by the following formula:

$$V = (D2-D1) / (T2-T1)$$

in the formula, V - a resilience speed, measured in μm/s,

D2 - a thickness of the microporous separator when its compressive loading force is reduced to 30 mN, measured in μm,

D1 - a thickness of the microporous separator when its compression deformation reaches the lowest point, measured in μm,

T2 - time required for the compressive loading force of the microporous separator to be reduced to 30 mN, measured in s,

T1 - time required for the compression deformation of the microporous separator to reach its lowest point, measured in s,

test condition: the microporous separator is subjected to a loading force of 500 mN in its thickness direction, and kept this loading force for 300 s, followed by reducing the value of the loading force at a rate of 30 mN/min.

A third aspect of the present invention provides a microporous separator for lithium battery obtained by the preparation method of the second aspect of the present invention.

In the following examples and comparative examples, the testing methods for relevant parameters are as follows.

(1) The quantity proportion of polyolefin chain segments with a weight-average molecular weight of 2 million to 5 million, and the quantity proportion of polyolefin chain segments with a weight-average molecular weight greater than 5 million and below 9 million are measured in accordance with GB/T 36214.4-2018.
(2) The melt index is measured according to GBT3682.1-2018.
(3) The resilience speed, compression deformation rate, and resilience deformation rate are measured using a TMA instrument (Waters, Q400).

Example 1

The polyethylene resin having a melt index of 0.1 g/10min and a molecular weight distribution of 4.5 was mixed with a plasticizer (paraffin oil with a kinematic viscosity of 45 mm$^2$/s at 40 °C) in a weight ratio of 28:72, and then melted and blended through an extruder to form a melt; where, in the polyethylene resin, the quantity proportion of polyethylene chain segments with a weight-average molecular weight of 2 million to 5 million was 6%, and the quantity proportion of polyethylene chain segments with a weight-average molecular weight greater than 5 million and below 9 million was 1.3%. The extruder temperature was 220 °C, and the extruder screw speed was 80 r/min.
The above-mentioned melt was cooled and solidified by a casting roller to form a thick sheet, with a temperature of casting roller of 25 °C. The obtained thick sheet was subjected to a stretching treatment, with a stretching temperature of 95 °C and a stretching ratio of 6.3 in the MD direction; and a first stretching temperature of 110 °C and a stretching ratio of 6 in the TD direction.
After the plasticizer (paraffin oil) was removed, a second stretching in the TD direction was carried out at a temperature of 133 °C, with a second stretching ratio of 1.4; and then the heat-setting treatment was performed at a temperature of 133 °C.

Examples 2 to 12 and Comparative Examples 1 to 2

Microporous separators are prepared with reference to the method of Example 1, and the differences between the preparation methods for microporous separator specifically adopted in Examples 2 to 12 as well as in Comparative Examples 1 to 2 and the preparation method of Example 1 are detailed in Table 1, where the parameters of Examples 2 to 12 as well as in Comparative Examples 1 to 2 which are not embodied in Table 1 are the same as those in Example 1.

Examples 2-1 to 2-3

Microporous separators are prepared with reference to the method of Example 2, and the differences between the preparation methods for microporous separator specifically adopted in Examples 2-1 to 2-3 and the preparation method of Example 2 are detailed in Table 2, where the parameters of Examples 2-1 to 2-3 which are not embodied in Table 2 are the same as those in Example 2.

Table 1

|  |  | Microporous separator | | | Raw material | | | |
| --- | --- | --- | --- | --- | --- | --- | --- | --- |
|  |  | Quantity proportion of polyolefin chain segments with a weight-average molecular weight of 2 million to 5 million /% | Quantity proportion of polyolefin chain segments with a weight-average molecular weight greater than 5 million and below 9 million /% | Melt index g/10min | Quantity proportion of polyolefin chain segments with a weight-average molecular weight of 2 million to 5 million /% | Quantity proportion of polyolefin chain segments with a weight-average molecular weight greater than 5 million and below 9 million /% | Melt index g/10min | Molecular weight distribution |
| Example 1 | | 5.3 | 1 | 0.13 | 6 | 1.3 | 0.1 | 4.5 |
| Example 2 | | 6.2 | 1 | 0.11 | 7 | 1.3 | 0.08 | 4.5 |

(continued)

| | Microporous separator | | | Raw material | | | |
|---|---|---|---|---|---|---|---|
| | Quantity proportion of polyolefin chain segments with a weight-average molecular weight of 2 million to 5 million /% | Quantity proportion of polyolefin chain segments with a weight-average molecular weight greater than 5 million and below 9 million /% | Melt index g/10min | Quantity proportion of polyolefin chain segments with a weight-average molecular weight of 2 million to 5 million /% | Quantity proportion of polyolefin chain segments with a weight-average molecular weight greater than 5 million and below 9 million /% | Melt index g/10min | Molecular weight distribution |
| Example 3 | 7.4 | 1 | 0.07 | 8 | 1.2 | 0.05 | 4.5 |
| Example 4 | 7.9 | 1 | 0.04 | 9 | 1.3 | 0.01 | 4.5 |
| Example 5 | 6.2 | 0 | 1.6 | 7 | 0 | 1.4 | 4.5 |
| Example 6 | 6.2 | 0.5 | 1.5 | 7 | 0.2 | 1.2 | 4.5 |
| Example 7 | 9.2 | 0.6 | 0.07 | 10 | 0.3 | 0.04 | 3 |
| Example 8 | 6.2 | 1 | 0.10 | 7 | 1.3 | 0.08 | 5 |
| Example 9 | 6.3 | 1.5 | 0.13 | 7 | 1.8 | 0.09 | 4.5 |
| Example 10 | 6.2 | 1 | 0.12 | 7 | 1.3 | 0.08 | 4.5 |
| Example 11 | 6.2 | 0 | 1.6 | 7 | 0 | 1.4 | 4.5 |
| Example 12 | 6.2 | 1 | 0.11 | 7 | 1.3 | 0.08 | 4.5 |
| Comparative Example 1 | 4.4 | 2 | 0.09 | 4.8 | 1.2 | 0.07 | 4.5 |
| Comparative Example 2 | 9.5 | 1 | 0.01 | 10 | 1.3 | 0.008 | 4.5 |

Table 1 (Continued)

| | Process | | | | Thickness /μm | Resilience speed /10$^{-4}$ μm/s | Compression deformation rate /% | Resilience deformation rate /% | Resilience recovery rate /% |
|---|---|---|---|---|---|---|---|---|---|
| | Roll speed of casting roller /m/min | Die lip opening (a) /mm | Thickness of thick sheet (h) /mm | Expansion coefficient A | | | | | |
| Example 1 | 6 | 1.2 | 1.5 | 1.3 | 11 | 11.8 | 0.72 | 4.92 | 4.2 |
| Example 2 | 6 | 1.2 | 1.5 | 1.3 | 11 | 10.4 | 0.68 | 4.48 | 3.8 |
| Example 3 | 6 | 1.2 | 1.5 | 1.3 | 11 | 8.2 | 0.66 | 3.76 | 3.1 |
| Example 4 | 6 | 1.2 | 1.5 | 1.3 | 11 | 7.6 | 0.63 | 3.23 | 2.6 |
| Example 5 | 6 | 1.2 | 1.5 | 1.3 | 11 | 17.1 | 2.4 | 7.4 | 5 |
| Example 6 | 6 | 1.2 | 1.5 | 1.3 | 11 | 13.6 | 1.8 | 6.4 | 4.6 |
| Example 7 | 6 | 1.2 | 1.5 | 1.3 | 11 | 7.9 | 0.79 | 4.39 | 3.6 |
| Example 8 | 6 | 1.2 | 1.5 | 1.3 | 11 | 11.3 | 0.66 | 4.66 | 4 |
| Example 9 | 6 | 1.2 | 1.5 | 1.3 | 11 | 7.2 | 0.53 | 1.23 | 0.7 |
| Example 10 | 6 | 1.4 | 1.5 | 1.1 | 11 | 4.6 | 0.92 | 2.02 | 1.1 |
| Example 11 | 6 | 1.4 | 1.5 | 1.1 | 11 | 13.2 | 2.5 | 6.3 | 3.8 |
| Example 12 | 6 | 1.3 | 1.6 | 1.2 | 11 | 9.8 | 0.88 | 3.1 | 2.22 |
| Comparative Example 1 | 6 | 1.2 | 1.5 | 1.3 | 11 | 1.9 | 0.54 | 1.14 | 0.6 |
| Comparative Example 2 | 6 | 1.2 | 1.5 | 1.3 | 11 | 1.8 | 0.58 | 1.28 | 0.7 |

Table 2

| | Microporous separator | | Raw material | | | | Process | |
|---|---|---|---|---|---|---|---|---|
| | Quantity proportion of polyolefin chain segments with a weight-average molecular weight of 2 million to 5 million /% | Quantity proportion of polyolefin chain segments with a weight-average molecular weight greater than 5 million and below 9 million /% | Quantity proportion of polyolefin chain segments with a weight-average molecular weight of 2 million to 5 million /% | Quantity proportion of polyolefin chain segments with a weight-average molecular weight greater than 5 million and below 9 million /% | Melt index g/10min | Molecular weight distribution | Extruder temperature /°C | Extruder screw speed r/min |
| Example 2-1 | 6.2 | 1 | 7 | 1.3 | 0.08 | 4.5 | 220 | 80 |
| Example 2-2 | 6 | 1.1 | 7 | 2 | 0.07 | 4.5 | 220 | 125 |
| Example 2-3 | 6.3 | 1.3 | 7 | 2 | 0.07 | 4.5 | 260 | 80 |

Table 2(Continued)

|  | Process | | | | Thickness /$\mu$m | Resilience speed /$10^{-4}\mu$m/s | Compression deformation rate /% | Resilience deformation rate /% | Resilience recovery rate /% |
|---|---|---|---|---|---|---|---|---|---|
|  | Roll speed of casting roller /m/min | Die lip opening ($a$) /mm | Thickness of thick sheet ($h$) /mm | Expansion coefficient $A$ | | | | | |
| Example 2-1 | 6 | 1.2 | 1.5 | 1.3 | 11 | 8.4 | 0.68 | 4.48 | 3.8 |
| Example 2-2 | 6 | 1.2 | 1.5 | 1.3 | 11 | 8.3 | 0.67 | 4.47 | 3.8 |
| Example 2-3 | 6 | 1.2 | 1.5 | 1.3 | 11 | 8.3 | 0.66 | 4.36 | 3.7 |

As can be seen from Examples 1-4 in Table 1, the resilience speed, resilience recovery rate, compression deformation rate, and resilience deformation rate of the microporous separator all decrease in a unified trend as the quantity proportion of polyolefin chain segments with a weight-average molecular weight of 2 million to 5 million increases.

From the comparison among Examples 5-6, Example 9, and Example 2, it can be seen that when the quantity proportion of polyolefin chain segments with a weight-average molecular weight of 5 million to 9 million decreases (<1%), the resilience speed, resilience recovery rate, and resilience deformation rate of the microporous separator increase greatly, but the compression deformation rate also increases (i.e. being deteriorated) correspondingly; when this quantity proportion increases (>1%), the compression deformation rate decreases (i.e. being improved to some extent), but the resilience speed and resilience recovery rate decrease.

From the comparison between Examples 7-8 and Example 2, it can be seen that the change in the molecular weight distribution of the raw material also has an impact on the performances of the microporous separator in the thickness direction, but the impact is not significant.

From the comparison between Example 10, 12 and Example 2, as well as from the comparison between Example 11 and Example 5, it can be seen that when the expansion coefficient is ≥ 1.2, better compression resilience performances in the thickness direction are obtained, and with the increase of the expansion coefficient, the compression resilience performances in the thickness direction are all improved. When the expansion coefficient is < 1.2, the compression resilience performances in the thickness direction all are reduced.

From Examples 2-1 to 2-3 in Table 2, it can be seen that the regulation of quantity proportion of polyolefin chain segments with a weight-average molecular weight of 2 million to 5 million in the microporous separator can be achieved by mutual matching of the extruder process and the raw materials.

Unless otherwise specified in the context, the singular forms of "a", "an", and "the" in the present description and appended claims include the plural forms. Unless otherwise defined, all technical and scientific terms used herein have the same meanings as those commonly understood by the person skilled in the art. In addition to the specific order disclosed, the methods described herein may be performed in any logically possible order.

The representative examples are intended to assist in illustrating the present invention, and are not intended for or should not be interpreted as limiting the scope of the invention. In fact, in addition to those shown and described herein, various modifications and many other embodiments of the present invention will become apparent to the person skilled in the art, including the embodiments and references to the scientific and patent documents cited herein. The embodiments contain important additional information, examples, and guidance that may be employed by the practice of the present invention in its various embodiments and equivalents.

**Claims**

1. A microporous separator for lithium battery, comprising a polyolefin resin, wherein the microporous separator has a melt index of 0.04 g/10min - 3 g/10min, preferably 0.08 g/10min - 0.4 g/10min; a quantity proportion of polyolefin chain segment ingredients with a weight-average molecular weight of 2 million to 5 million in the microporous separator is 5 mol% - 8 mol%, preferably 5 mol% - 7 mol%; a resilience speed of the microporous separator in its thickness direction is greater than or equal to $2 \times 10^{-4}$ μm/s, preferably, greater than or equal to $3 \times 10^{-4}$ μm/s, greater than or equal to $5 \times 10^{-4}$ μm/s, greater than or equal to $7 \times 10^{-4}$ μm/s, greater than or equal to $8 \times 10^{-4}$ μm/s, and most preferably greater than or equal to $10 \times 10^{-4}$ μm/s; and

   the resilience speed of the microporous separator in its thickness direction is calculated by following formula:

   $$V = (D2 - D1) / (T2 - T1)$$

   in the formula, V - the resilience speed, measured in μm/s,
   D2 - a thickness of the microporous separator when its compressive loading force is reduced to 30 mN, measured in μm,
   D1 - a thickness of the microporous separator when its compression deformation reaches the lowest point, measured in μm,
   T2 - time required for the compressive loading force of the microporous separator to be reduced to 30 mN, measured in s,
   T1 - time required for the compression deformation of the microporous separator to reach the lowest point, measured in s,
   test condition: the microporous separator is subjected to a loading force of 500 mN in its thickness direction, and kept the loading force for 300 s, followed by reducing a value of the loading force at a rate of 30 mN/min.

2.  The microporous separator for lithium battery according to claim 1, wherein a quantity proportion of polyolefin chain segment ingredients with a weight-average molecular weight greater than 5 million and below 9 million in the microporous separator is 0 mol% - 1 mol%, preferably 0.5 mol% - 1 mol%.

3.  The microporous separator for lithium battery according to claim 1 or 2, wherein the microporous separator satisfies one or more of the following:

    a. when measured under the test condition, a compression deformation rate of the microporous separator in its thickness direction is less than or equal to 2.5%, preferably less than or equal to 1.8%, more preferably less than or equal to 1.5%, and most preferably less than or equal to 1%;
    b. when measured under the test condition, a resilience recovery rate of the microporous separator in its thickness direction is greater than or equal to 0.5%, preferably greater than or equal to 1%, greater than or equal to 1.5%, greater than or equal to 2%, and most preferably greater than or equal to 3%;

    wherein, the compression deformation rate = (original thickness - thickness when the compression deformation reaches the lowest point)/original thickness × 100%, a resilience deformation rate = (original thickness - thickness when the compressive loading force is reduced to 30 mN)/original thickness × 100%, a resilience recovery rate = | the compression deformation rate - the resilience deformation rate |.

4.  The microporous separator for lithium battery according to any one of claims 1 to 3, wherein the polyolefin resin has a molecular weight distribution between 3 and 5, preferably between 3.5 and 4.5.

5.  The microporous separator for lithium battery according to any one of claims 1 to 4, wherein the quantity proportion of polyolefin chain segment ingredients with the weight-average molecular weight of 2 million to 5 million in the polyolefin resin is 5 mol% - 9 mol%, preferably 5 mol% - 8 mol%, and more preferably 6 mol% - 8 mol%;
    further, a quantity proportion of polyolefin chain segment ingredients with a weight-average molecular weight greater than 5 million and below 9 million in the polyolefin resin is 0 mol% - 2 mol%, preferably 1 mol% - 1.5 mol%.

6.  The microporous separator for lithium battery according to any one of claims 1 to 5, wherein the microporous separator is a separator prepared by a wet process.

7.  The microporous separator for lithium battery according to any one of claims 1 to 6, wherein the polyolefin resin is selected from polyethylene (comprising, for example, LDPE, LLDPE, HDPE, UHDPE), polypropylene, polybutene, polymethylpentene, a copolymer thereof, or a mixture thereof.

8.  The microporous separator for lithium battery according to any one of claims 1 to 7, wherein the microporous separator has an average pore diameter of 25 nm - 50 nm, preferably 30 nm - 45 nm; and the microporous separator has a thickness of 1 μm - 30 μm, preferably 4 μm -12 μm.

9.  A preparation method for a microporous separator for lithium battery, comprising the following steps:

    (a) melting and blending a mixture containing a polyolefin resin and a plasticizer to form a melt;
    (b) extruding and solidifying the melt obtained in step (a) to obtain a thick sheet;
    (c) stretching the obtained thick sheet in a machine direction (MD direction) and in a transverse direction (TD direction) perpendicular to the machine direction to obtain a stretched sheet;
    (d) removing the plasticizer from the stretched sheet to obtain a precursor of separator;
    (e) heat-setting the precursor of separator to obtain the microporous separator for lithium battery;

    where, the polyolefin resin has a melt index of 0.01 g/10min -3 g/10min, preferably 0.05 g/10min - 0.3 g/10min; and a quantity proportion of polyolefin chain segment ingredients with a weight-average molecular weight of 2 million to 5 million in the polyolefin resin is 5 mol% - 9 mol%, preferably 5 mol% - 8 mol%, and more preferably 6 mol% - 8 mol%.

10. The preparation method according to claim 9, wherein in step (a), a quantity proportion of polyolefin chain segment ingredients with a weight-average molecular weight greater than 5 million and below 9 million in the polyolefin resin is 0 mol% - 2 mol%, preferably 1 mol% - 1.5 mol%;

further, the quantity proportion of polyolefin chain segment ingredients with the weight-average molecular weight greater than 5 million and below 9 million in the microporous separator is 0 mol% -1 mol%, preferably 0.5 mol% - 1 mol%;

further, the polyolefin resin has a molecular weight distribution of 3-5, preferably 3.5-4.5;

the quantity proportion of polyolefin chain segment ingredients with the weight-average molecular weight of 2 million to 5 million in the microporous separator is 5 mol% - 8 mol%, preferably 5 mol% -7 mol%;

a resilience speed of the microporous separator in its thickness direction is greater than or equal to $2 \times 10^{-4}$ $\mu$m/s, preferably, greater than or equal to $3 \times 10^{-4}$ $\mu$m/s, greater than or equal to $5 \times 10^{-4}$ $\mu$m/s, greater than or equal to $7 \times 10^{-4}$ $\mu$m/s, greater than or equal to $8 \times 10^{-4}$ $\mu$m/s, and most preferably greater than or equal to $10 \times 10^{-4}$ $\mu$m/s; and

the resilience speed of the microporous separator in its thickness direction is calculated by following formula:

$$V = (D2 - D1) / (T2 - T1)$$

in the formula, V - the resilience speed, measured in $\mu$m/s,

D2 - a thickness of the microporous separator when its compressive loading force is reduced to 30 mN, measured in $\mu$m,

D1 - a thickness of the microporous separator when its compression deformation reaches the lowest point, measured in $\mu$m,

T2 - time required for the compressive loading force of the microporous separator to be reduced to 30 mN, measured in s,

T1 - time required for the compression deformation of the microporous separator to reach the lowest point, measured in s,

test condition: the microporous separator is subjected to a loading force of 500 mN in its thickness direction, and kept the loading force for 300 s, followed by reducing a value of the loading force at a rate of 30 mN/min;

further, a weight ratio of the polyolefin resin to the plasticizer in step (a) is between 15:85 and 35:65, preferably between 18:82 and 23:77.

11. The preparation method according to claim 9 or 10, wherein in step (a), an extruder is used for the melting and blending, and the extruder has parameters comprising: an extruder temperature of 150 °C - 260 °C and an extruder screw speed of 60 r/min - 125 r/min.

12. The preparation method according to claim 11, wherein in step (b), the mixture is extruded through a die lip of a die and attached to a casting roller for cooling and solidifying to form a thick sheet, a die lip opening being *a*, a thickness of thick sheet being *h,* and an expansion coefficient being defined as $A = h / a$, wherein A is controlled to be greater than or equal to 1.2;

further, the casting roller has a roll speed of 3 m/min - 8 m/min, and the die has a temperature of 160 °C - 240 °C.

13. The preparation method according to any one of claims 9 to 12, wherein in step (c), the stretching in the MD direction is carried out at 80 °C - 120 °C with a stretching ratio of 4 to 7, and the stretching in the TD direction is carried out at 90 °C - 130 °C with a stretching ratio of 4 to 12.

14. The preparation method according to any one of claims 9 to 13, wherein in step (e), the heat-setting comprises an oven heat treatment and a roller heat treatment, and preferably, the oven heat treatment has a temperature of 120 °C - 150 °C, and the roller heat treatment has a temperature of 50 °C - 70 °C.

15. The preparation method according to any one of claims 9 to 14, wherein the polyolefin resin is selected from polyethylene (comprising, for example, LDPE, LLDPE, HDPE, UHDPE), polypropylene, polybutene, polymethylpentene, a copolymer thereof, or a mixture thereof.

# INTERNATIONAL SEARCH REPORT

| | |
|---|---|
| International application No. | |
| **PCT/CN2024/102443** | |

| A. | CLASSIFICATION OF SUBJECT MATTER |
|---|---|

H01M 50/417(2021.01)i; H01M50/449(2021.01)i

According to International Patent Classification (IPC) or to both national classification and IPC

| B. | FIELDS SEARCHED |
|---|---|

Minimum documentation searched (classification system followed by classification symbols)

IPC:H01M50

Documentation searched other than minimum documentation to the extent that such documents are included in the fields searched

Electronic data base consulted during the international search (name of data base and, where practicable, search terms used)

CNTXT, VCN, ENTXT, VEN, CJFD: 隔膜, 孔, 聚烯烃, 回弹, 压缩, 熔融指数, 重均分子量, 聚乙烯, 石蜡油, 拉伸, separator, microporous film, rebound, compression, polyethylene, melt index, molecular weight

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 20050079898 A (TORAY SAEHAN INC.) 11 August 2005 (2005-08-11) description, page 4, paragraph 2 to page 6, paragraph 10, and embodiments 1-9 | 1-15 |
| A | CN 111697189 A (FOSHAN JINHUI HI-TECH PHOTOELECTRIC MATERIAL CO., LTD.) 22 September 2020 (2020-09-22) entire document | 1-15 |
| A | CN 114552127 A (LI XIN) 27 May 2022 (2022-05-27) entire document | 1-15 |
| A | WO 2023045384 A1 (SINOMA LITHIUM BATTERY SEPARATOR CO., LTD.) 30 March 2023 (2023-03-30) entire document | 1-15 |
| A | JP 2016191006 A (ASAHI KASEI CORP.) 10 November 2016 (2016-11-10) entire document | 1-15 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 August 2024** | **09 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/102443**

| Patent document cited in search report | | | Publication date (day/month/year) | Patent family member(s) | | | Publication date (day/month/year) |
|---|---|---|---|---|---|---|---|
| KR | 20050079898 | A | 11 August 2005 | KR | 100637630 | B1 | 23 October 2006 |
| CN | 111697189 | A | 22 September 2020 | None | | | |
| CN | 114552127 | A | 27 May 2022 | None | | | |
| WO | 2023045384 | A1 | 30 March 2023 | None | | | |
| JP | 2016191006 | A | 10 November 2016 | JP | 6548430 | B2 | 24 July 2019 |

Form PCT/ISA/210 (patent family annex) (July 2022)